Europäisches Patentamt

European Patent Office

Office européen des brevets

(19)

(11) **EP 0 949 588 A1**

(12) **DEMANDE DE BREVET EUROPEEN**

(43) Date de publication:
13.10.1999 Bulletin 1999/41

(51) Int. Cl.$^6$: **G06T 7/00**

(21) Numéro de dépôt: 99400832.4

(22) Date de dépôt: 06.04.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 10.04.1998 FR 9804560

(71) Demandeur:
COMMISSARIAT A L'ENERGIE ATOMIQUE
75015 Paris (FR)

(72) Inventeurs:
• Guillemaud, Régis
  38000 Grenoble (FR)
• Durbec, Sébastien
  8032 Zürich (CH)

(74) Mandataire: Des Termes, Monique
Société Brevatome
3, rue du Docteur Lanceraux
75008 Paris (FR)

(54) **Procédé de recalage de deux images differentes d'un meme objet**

(57) L'invention concerne un procédé de recalage de deux images différentes d'un même objet consistant à décomposer chacune des images en composantes spatiales représentatives de la distribution des niveaux de gris de l'image, à appliquer une méthode de recalage par la phase sur les composantes pour une mise en correspondance des composantes d'une image avec celles de l'autre image, à sommer l'ensemble des résultats de la mise en correspondance et à détecter, dans l'image résultant de cette somme, le niveau de gris maximum qui définit la transformation entre les deux images initiales.

FIG. 3

## Description

Domaine de l'invention

L'invention concerne un procédé de recalage de deux images différentes d'un même objet et, en particulier, de deux images multimodales. Elle trouve des applications dans tous les domaines nécessitant une superposition d'images différentes d'un même objet et, en particulier, dans les domaines du contrôle non-destructif et de l'imagerie médicale.

Etat de la technique

L'exploitation d'images nécessite souvent une superposition d'images. Bien que ces images sont généralement représentatives d'un même objet, elles ne sont pas superposables directement pour différentes raisons : elles peuvent avoir été prises à des instants différents ou par des systèmes d'acquisition différents.

En outre, même pour des images ayant des structures géométriques équivalentes (c'est-à-dire des images qui contiennent des éléments d'objets identiques), la distribution des niveaux de gris sur les deux images à superposer peut différer d'une image à l'autre ; on parle alors d'images multimodales.

Pour être exploitables simultanément, et en particulier superposables, de telles images doivent, au préalable, être mises en correspondance, c'est-à-dire être mises dans un repère géométrique commun aux deux images ; il est donc nécessaire de déterminer la transformation géométrique qui permet de représenter une des images dans le repère géométrique de l'autre image ; on parle alors de recalage d'images.

En particulier, le recalage d'images est nécessaire en imagerie médicale pour permettre l'observation d'une même partie du corps humain dont une image est obtenue, par exemple, par un scanner à rayonnements X et une autre image est obtenue, par exemple, par IRM (imagerie par résonance magnétique) ou encore par tomographie d'émission à photon unique (SPECT).

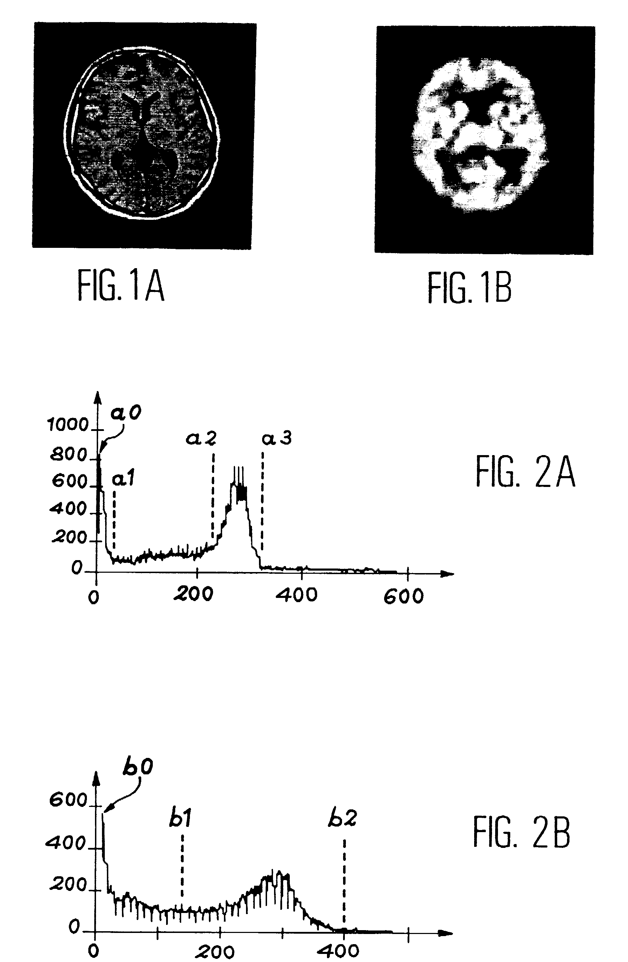

Les figures 1A et 1B représentent deux exemples d'images d'un cerveau humain ; la figure 1A montre une coupe axiale du cerveau en IRM et la figure 1B montre une coupe axiale du cerveau en SPECT. Ces deux images, de modalités différentes, sont liées par une transformation rigide.

Actuellement, plusieurs méthodes sont connues pour recaler deux images du type décrit précédemment.

Certaines méthodes font l'hypothèse que les distributions de niveaux de gris sont équivalentes pour les deux images à recaler ; les niveaux de gris des images sont alors utilisés directement pour calculer le décalage entre les deux images. Parmi ces méthodes, il y a la méthode d'intercorrélation qui consiste à déterminer le maximum d'une fonction de la transformation ou bien d'un produit dans le domaine fréquentiel.

Cependant, ces méthodes présentent un inconvénient majeur qui réside dans le fait que le bruit dans les images ainsi que certaines distorsions locales peuvent cacher le pic de corrélation, ce qui fausse les résultats du recalage.

De plus, du fait même de l'hypothèse faite sur les niveaux de gris, ces méthodes ne peuvent être applicables pour des images multimodales.

Certaines de ces méthodes de recalage sont basées sur les moments spatiaux ou fréquentiels des images et permettent de déterminer la localisation, l'orientation ou le changement de taille d'un objet dans une image. Cependant, même si, en théorie, une image est complètement décrite par tous ses moments, en pratique, les moments d'ordre élevé sont très sensibles aux bruits et aux distorsions de contours.

Dans le cas où les images sont très bruitées, ou si les niveaux de gris des images diffèrent trop, ou encore si les images sont dans des modalités différentes, alors l'algorithme de recalage de ces méthodes est faussé et le recalage des images est incorrect.

D'autres méthodes de recalage sont également connues. Ces méthodes utilisent une information d'ordre supérieur à partir d'indices visuels extraits des images. Par exemple, certaines de ces méthodes consistent à isoler, dans les deux images, des points en correspondance directe. Ces points sont soit sélectionnés manuellement dans chacune des deux images, soit sélectionnés au moyen de marqueurs désignant, avant l'acquisition, certains points de repère à partir desquels se fera le recalage des images. La distance entre ces points est ensuite diminuée progressivement, par un algorithme de recalage basé, par exemple, sur une régression suivant les moindres carrés, sur une décomposition en valeurs singulières en 3D, ou sur d'autres méthodes mathématiques connues.

Ces méthodes peuvent être appliquées pour des contours, des surfaces ou tout autre ensemble de points.

Elles présentent l'avantage de permettre la manipulation d'une quantité d'informations réduite par rapport à celle des méthodes décrites précédemment, tout en tenant compte de l'introduction d'une information supérieure. Cependant, elles ont l'inconvénient d'être dépendantes de la façon dont sont mises en évidence les informations.

De plus, les informations extraites de deux images doivent nécessairement représenter les mêmes structures (éléments d'objets contenues dans les images), en particulier pour les images multimodales. Ces méthodes peuvent alors être instables vis-à-vis de modification de ces informations extraites, ce qui conduit à des erreurs géométriques.

En particulier, pour des images acquises (c'est-à-dire non simulées), l'extraction d'informations est généralement instable et difficile, un changement de paramétrage pouvant changer complètement la solution trouvée. Par exemple, un changement de seuil modifie, dans la plupart des cas, la structure de l'objet extrait de l'image.

Une autre méthode connue est la méthode de recalage en translation par la phase, qui se déduit des propriétés de la transformée de Fourier vis-à-vis de la translation dans le domaine spatial (DIGITAL IMAGE PROCESSING, W. K. PRATT, Ed. Wiley Interscience, page 12). Dans cette méthode, on appelle, respectivement, $u(\vec{x})$ et $v(\vec{x})$ les deux images considérées, où $\vec{x}$ est le vecteur des coordonnées. Si les deux images sont liées par une translation de vecteur $\vec{t}$, on a :

$$u(\vec{x}) = v(\vec{x} - \vec{t}).$$

Par transformée de Fourier, où $\vec{f}$ représente les coordonnées spatiales, on obtient alors :

$$U(\vec{f}) = \left|U(\vec{f})\right|.e^{J\theta_u(\vec{f})} = \left|V(\vec{f})\right|.e^{J\theta_u(\vec{f})}.e^{J(\vec{t}\,\vec{f})} = V(\vec{f}) \times e^{J(\vec{t}\,\vec{f})}$$

En ne conservant que les phases des signaux, en effectuant leur produit après conjugaison de l'un d'entre eux, et en prenant la transformation inverse, on obtient :

$$\mathfrak{J}^{-1}\left(e^{J(-\theta_u(\vec{f})+\theta_u(\vec{f})+\vec{t}\,\vec{f})}\right) = \mathfrak{J}^{-1}\left(e^{J(\vec{t}\,\vec{f})}\right) = \delta_{\vec{t}}(\vec{x})\ .$$

On observe alors un pic de Dirac en $\vec{x} = \vec{t}$.

Cependant, cette méthode est limitée tout d'abord, à des images de même modalités et ensuite à des transformations de types translations.

Par ailleurs, une méthode basée sur la maximisation d'informations mutuelles permet un recalage d'images multimodales. Une telle méthode est décrite dans le document « multimodality Image Registration by Maximization of mutual information » de MAES, CALLIGNON et Al., IEEE Transactions on medical imaging, vol. 16, Avril 1997, ou dans le document « Multi-modal volume registration by maximization of mutual information », de WELLS et Al., Medical Image Analysis, vol. 1, n° 1, p. 35-51, Février 1996.

Cette méthode a l'inconvénient de nécessiter un nombre de calculs important, ainsi qu'un algorithme d'optimisation pour converger vers la solution, d'où des problèmes de temps de calcul non-constant, et un risque de convergence vers un minimum local, ce qui correspond à une mauvaise solution.

Exposé de l'invention

L'invention a justement pour but de remédier aux inconvénients des méthodes citées précédemment. A cette fin, elle propose un procédé pour recaler, en un temps quasiment constant, deux images différentes qui peuvent être des images multimodales. Cette méthode consiste à décomposer chacune des images en composantes spatiales représentatives de la distribution des niveaux de gris de l'image, à appliquer la méthode de recalage par la phase sur les composantes pour une mise en correspondance des composantes d'une image avec celles de l'autre image, à sommer l'ensemble des résultats de la mise en correspondance et à détecter, dans l'image résultant de cette somme, le niveau de gris maximum qui définit la transformation entre les deux images initiales.

De façon plus précise, l'invention concerne un procédé de détermination d'une transformation géométrique entre deux images I1 et I2 différentes, représentatives toutes deux d'un même objet, en vue de les superposer. Ce procédé se caractérise par le fait qu'il consiste à :

E13) segmenter chacune des images en différentes composantes et en déduire, pour chaque image, un ensemble d'images segmentées ;
E16) recaler les images seuillées par une

mise en correspondance, par le phase, de chaque image : 16a) en prenant, dans l'ensemble d'images seuillées correspondant à l'image I1 et dans l'ensemble d'images seuillées correspondant à l'image I2, respectivement, une première et une seconde composantes d'image seuillée constituant la première et la seconde composantes d'un couple de composantes ;

16b) en effectuant une transformée T pour passer chaque composante du couple du domaine spatial à un domaine dual fréquentiel ;

16c) en calculant une image de phase pour chaque composante du couple ;

16d) en calculant, pour chaque couple, une différence entre les deux images de phase des deux composantes du couple et en déduisant une image de différences de phases ;

16e) en déterminant la transformée $T^{-1}$ inverse de la transformée T de cette image de différences de phases pour déterminer une image de décalage ; et

16f) en effectuant les étapes 16a à 16e pour chaque couple de composantes ;

E18) sommer l'ensemble des images de décalage obtenues en 16e pour déterminer une image de décalage total ; et

E20) déterminer, dans cette image de décalage total, le pixel ayant la valeur maximale, les coordonnées de ce pixel fixant les paramètres de la transformation géométrique entre les deux images I1 et I2.

Selon un premier mode de réalisation de l'invention, dans lequel la transformation géométrique est une translation, les étapes 16b à 16e consistent à appliquer une transformée de Fourier simple.

Selon un second mode de réalisation de l'invention, où la transformation géométrique est une rotation associée à un changement d'échelle, les étapes 16b et 16e consistent à appliquer la transformée de Fourier-Mellin à un groupe constitué d'une rotation et d'un changement d'échelle et à l'associer à une mesure de Haar pour déterminer les paramètres de la rotation et du changement d'échelle.

Selon un troisième mode de réalisation de l'invention, dans lequel la transformation géométrique est une translation associée à une rotation, les étapes 16b à 16e consistent à appliquer une transformée de Fourier simple associée à une rotation des images.

Dans ce mode de réalisation :

- on applique des recalages successifs aux deux images en procédant à des rotations successives sur l'une des deux images et en les recalant l'une par rapport à l'autre, à chaque fois, par la méthode de la phase en translation (cf premier mode de réalisation) ;
- pour une translation et pour chaque recalage, on détermine une image de recalage ;
- on recherche le pixel de valeur maximum dans l'ensemble des images de décalage obtenues pour l'ensemble des rotations (la translation est déterminée par la position du pixel maximum de l'image qui le contient), l'image de décalage contenant ce maximum étant associée à une rotation. Cette rotation et la translation définissent la transformation géométrique.

Avantageusement, le procédé de l'invention consiste à étendre les images de différences de phases par une méthode de zéro-padding afin d'augmenter la précision des paramètres déterminés à l'étape E20.

Selon un mode de réalisation de l'invention, la segmentation E13 des images est effectuée en fonction des niveaux de gris des images, cette segmentation consistant à :

E12) déterminer, pour chaque image, un histogramme des niveaux de gris de l'image et choisir, parmi ces niveaux de gris, n seuils de niveaux de gris pour chaque image, avec $n \geq 2$ ;

E14) décomposer chacune des images en fonction de ses n seuils de niveaux de gris et en déduire, pour chaque image I1 et I2, un ensemble de n-1 images segmentées.

Brève description des figures

- Les figures 1A et 1B représentent deux exemples d'images d'un cerveau humain réalisées par des moyens d'acquisition différents ;
- les figures 2A et 2B représentent les histogrammes des niveaux de gris des images des figures 1A et 1B ;
- la figure 3 représente le diagramme fonctionnel du procédé de l'invention ;
- la figure 4 représente un exemple d'histogramme et de choix des seuils de niveaux de gris ; et
- la figure 5 représente schématiquement un exemple d'image obtenue dans le cas où on utilise la méthode « zéro-padding ».

Description détaillée de modes de réalisation de l'invention

L'invention concerne un procédé destiné à recaler deux images d'un même objet, réalisées au moyen de deux systèmes d'acquisition différents ou au moyen d'un seul système d'acquisition mais à deux moments différents. Le recalage de ces deux images se fait en déterminant la transformation géométrique permettant de mettre les deux images dans un même repère de façon à les superposer. Cette transformation géométrique est déterminée en :

- décomposant chacune des images en une pluralité de composantes spatiales représentatives de la distribution des niveaux de gris de chaque image ;
- mettant en correspondance, par la phase, une composante de chaque image pour former des couples de composantes ; et en
- sommant l'ensemble des résultats de la mise en correspondance, puis en détectant le niveau de gris maximum, dans l'image résultant de cette somme.

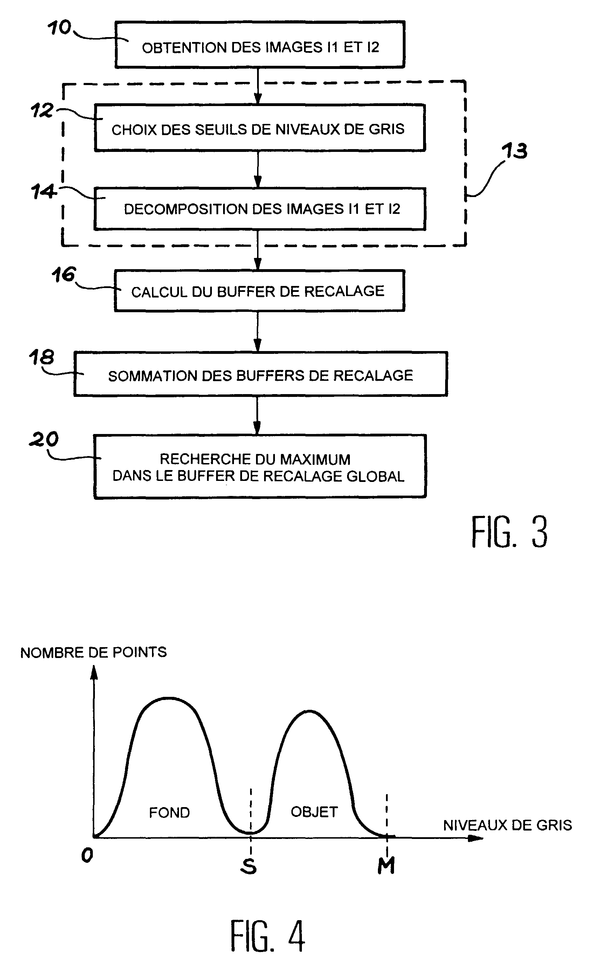

Plus précisément, le procédé de l'invention comporte les différentes étapes représentées dans le diagramme fonctionnel de la figure 3.

La première étape du procédé, référencée 10, est une étape d'obtention des deux images I1 et I2, chacune de ces images étant un ensemble de pixels. Ces deux images I1 et I2 peuvent être obtenues à partir d'un dispositif d'acquisition d'images identiques, ou à partir de dispositifs d'acquisition d'images différents ; il est possible également que l'une de ces images soit une image simulée ou une image modèle, telle qu'une carte dans le cas, par exemple, du recalage d'une image satellite avec une carte géographique.

L'étape 13 du procédé de l'invention consiste à segmenter chacune des images en différentes composantes et à en déduire, pour chaque image, un ensemble d'images segmentées en fonction d'au moins une de ces composantes.

La segmentation peut être réalisée en fonction des niveaux de gris des images, ou bien suivant la texture, la couleur, etc., des images ou encore automatiquement, comme décrit dans le document « Parameter Estimation and Tissue Segmentation from Multipsectral Images », IEEE Trans. on Medical Imaging, Z. LIANG et Al, volume 13, no. 3, September 1994, pages 441 - 449.

Selon un mode de réalisation préféré de l'invention, cette segmentation est effectuée en fonction des niveaux de gris des images. En particulier, cette étape 13 consiste en une étape 12 de choix des seuils de niveaux de gris pour chacune des images I1 et I2. Autrement dit, cette étape consiste à choisir, indépendamment pour chacune des images, un certain nombre de seuils de niveaux de gris. Ainsi, $n1$ seuils de niveaux de gris seront choisis pour définir l'image I1, et $n2$ seuils de niveaux de gris seront choisis pour définir l'image I2. Les seuils de niveaux de gris d'une image sont choisis de façon à ce que les pixels de cette image compris entre deux seuils soient les plus représentatifs possible de la structure contenue dans l'image, c'est-à-dire de l'objet représenté sur l'image.

Ce choix des seuils de niveaux de gris est effectué, en particulier, en construisant, pour chacune des images, un histogramme des niveaux de gris de l'image ; cet histogramme est une fonction qui, pour chaque niveau de gris de l'image, indique le nombre de pixels qui ont ce niveau de gris. A partir de l'histogramme des niveaux de gris d'une image, un ou plusieurs seuils sont choisis de façon à permettre l'identification des structures, telles que l'objet par rapport au fond de l'image.

Sur la figure 4, on a représenté un exemple d'histogramme des niveaux de gris d'une image représentant un objet clair sur un fond sombre. Les niveaux de gris d'une image étant fonction du nombre de pixels (ou points images) ayant ce niveau de gris, l'histogramme de la figure 4 montre un premier pic représentant le fond de l'image et un second pic représentant l'objet lui-même. Cet histogramme a donc deux modes. Dans cet exemple, un seuil unique est choisi pour décomposer l'image ; ce seuil a pour valeur, le milieu des deux modes (chaque mode correspondant à un pic), référencé S sur la figure 4. Ce seuil S est associé à deux seuils naturels O et M qui sont, respectivement, les valeurs minimum et maximum des niveaux de gris de l'histogramme. Les trois seuils utilisés ici sont alors :

- la valeur minimum, en particulier 0 ;
- le seuil S correspondant au milieu des deux modes ;
- la valeur maximum sur l'image, appelée M.

Les pixels de niveaux de gris entre 0 et S sont représentatifs du fond de l'image et les pixels de niveaux de gris entre S et M sont représentatifs de l'objet dans l'image.

La définition de seuils peut se faire par plusieurs méthodes différentes :

- une approche manuelle dans laquelle l'opérateur choisit le seuil, par exemple de façon itérative ;
- une méthode dans laquelle les seuils sont, a priori, connus pour les classes d'images traitées, c'est-à-dire, par exemple, lorsque les valeurs des images correspondent à des grandeurs physiques, comme c'est le cas pour les scanners X ;

- des méthodes de calculs pour calculer automatiquement le nombre de seuils à utiliser, ainsi que les valeurs des seuils : par exemple, à partir d'études des modes de l'histogramme, ou à partir d'un algorithme itératif. Le seuil est alors défini comme la valeur du niveau de gris où les deux Gaussiennes les plus proches s'intercroisent.

Cette méthode de détermination du nombre de seuils par modélisation d'un histogramme sous forme d'une somme de gaussienne est décrite par Z. LIANG, J. R. Mac FALL, D. P. HARRINGTON, 1994, dans « Parameter Estimation and Tissue Segmentation from Multispectral Images », dans IEEE Trans. On Medical Imaginig, volume 13, n° 3, Septembre 1994, p. 441-449.

Sur les figures 2A et 2B, on a représenté les histogrammes des niveaux de gris des images des figures 1A et 1B, respectivement. Pour l'histogramme de la figure 2A, les seuils choisis peuvent être a0, a1, a2 et a3 et pour l'histogramme de la figure 2B, les seuils peuvent être b0, b1 et b2.

La troisième étape du procédé de l'invention, référencée 14, est une étape de décomposition des images I1 et I2 en différentes composantes, établies à partir des seuils déterminés à l'étape 12. En particulier, chaque image I1 et I2 est décomposée en un ensemble de composantes (si le nombre de seuils choisis pour une image est n, alors le nombre de composantes de cette image est n-1). Chacune de ces composantes est définie par rapport à un seuil haut et un seuil bas. On obtient ainsi, pour chaque image I1 et I2, un ensemble d'images seuillées. Les valeurs des pixels de ces images seuillées sont définies de la façon suivante :

. une constante, par exemple 0, si le niveau de gris du pixel dans l'image initiale n'est pas dans l'intervalle (seuil bas, seuil haut) ; et

. FONC(niveau-gris-pixel) si le niveau de gris du pixel dans l'image initiale est dans l'intervalle [seuil bas, seuil haut]. Cette fonction FONC peut être une fonction quelconque non nulle et, en particulier, la fonction de valeur constante 1, ou la fonction identité.

Le procédé de l'invention se poursuit par une étape 16 de calcul du buffer de recalage par la phase pour chaque couple de composantes des images I1 et I2. On appelle buffer de recalage, une zone mémoire multidirectionnelle échantillonnée, où est accumulé l'essentiel des solutions possibles.

Cette étape 16 consiste à :

16a) constituer des couples de composantes (C1, C2), où C1 est un membre de l'ensemble des composantes de l'image I1 et C2 un membre de l'ensemble des composantes de l'image I2.

Selon un mode de réalisation de l'invention, tous les couples de composantes possibles sont déterminés à cette étape 16a.

Selon un autre mode de réalisation, un seul couple de composante est déterminé à l'étape 16a ; les traitements suivants de l'étape 16 sont alors appliqués à ce couple ; ensuite un nouveau couple de composantes sera déterminé, auquel sera appliqué le traitement des étapes 16a à 16f, et ainsi de suite.

16b) effectuer la transformée de Fourier pour chaque composante du couple de composantes ;
16c) calculer une image de phase pour chaque composante du couple de composantes (C1, C2) ;
16d) calculer, pour chaque couple de composantes, la différence entre les deux images de phases qui viennent d'être calculées et qui lui sont associées ;
16e) déterminer une image complexe M de cette différence de phase ou bien une image représentative de son module et de sa partie réelle ;
16f) effectuer la transformée de Fourier inverse de l'image complexe M afin d'obtenir une image de décalage mémorisée dans le buffer de recalage.

Cette étape 16 correspond, dans le cas d'une simple translation, à l'application de la méthode de recalage en translation par la phase, décrite précédemment.

Il est à noter que l'on a décrit cette étape 16 pour le cas d'une translation ; la transformée appliquée est donc la transformée de Fourier. Toutefois, d'une façon plus générale, la transformée à appliquer est une transformée qui permet de passer chaque composante du couple du domaine spatial à un domaine dual fréquentiel.

Le procédé de l'invention comporte ensuite une étape 18 de sommation de l'ensemble des images de décalage contenues dans les buffers de recalage pour déterminer, dans un buffer global, une image de décalage total.

Enfin, le procédé de l'invention comporte une étape 20 de recherche de la valeur maximum, dans l'image de décalage total ; cette valeur maximum correspond au niveau de gris maximum dans l'image, qui donne la translation en x et en y de l'image I1 dans le repère de l'image I2. Cette recherche du maximum dans l'image de recalage total consiste, en fait, à calculer la transformation géométrique qui permet de superposer les images I1 et I2 dans un même repère, cette transformation géométrique étant déterminée à partir des coordonnées du pixel de valeur maximum.

Dans le cas classique où la recherche de décalage est une recherche de translation sur des images bidimensionnelles, l'image de recalage total est de dimension 2 et les coordonnées du maximum représentent en x la translation selon la direction X, définie en pixels, et en y la translation selon la direction Y, définie également en pixels.

Selon un mode de réalisation de l'invention, le procédé de l'invention peut être mis en oeuvre pour des transformations plus complexes qu'une translation entre deux images. En particulier, elle peut être utilisée pour une application en rotation ; dans ce cas, la transformée de Fourier de l'étape 16 est remplacée par une transformation de Fourier-Mellin, ce qui permet de calculer l'échelle et la rotation entre deux images.

En outre, une rotation d'images (une des deux images) avant phase peut être effectuée ; dans ce cas, on applique différentes rotations à l'image I1 et on fait un recalage entre chaque image I1 tournée et l'image I2 par la méthode de recalage par la phase, décrite précédemment, ce qui permet de générer un buffer de recalage pour chaque rotation. La transformation finale est trouvée en cherchant le maximum d'un ensemble de buffers de recalage. Le buffer qui contient ce maximum, définit alors la rotation entre les images, tandis que la translation est définie par la position du maximum dans ce buffer.

Le procédé de l'invention peut également être appliqué à des transformations élastiques, qui permettent de modéliser les déformations d'un objet. Dans ce cas, le mouvement élastique est modélisé par la composition d'un ensemble de transformations rigides locales. Le calcul de chaque transformation locale rigide se fait alors par la méthode de recalage par la phase en translation et, éventuellement, en rotation.

La transformation géométrique, telle que déterminée à l'étape 20 du procédé de l'invention, peut être utilisée directement ou indirectement. En effet, la transformation géométrique déterminée par le procédé peut constituer directement l'information recherchée par l'utilisateur, à savoir le mouvement d'un objet par rapport à une caméra. Elle peut, par ailleurs, être appliquée à l'une des images I1 ou I2, de façon à présenter les deux images I1 et I2 dans un même repère géométrique, afin de faciliter l'utilisation ou l'interprétation des images par l'utilisateur, ce qui est le cas dans les exemples d'images de cerveau des figures 1A et 1B.

On notera que dans toute la description du procédé de l'invention, qui vient d'être donnée, le traitement a été effectué pour des déplacements rigides, multiples entiers de la taille des pixels. Autrement dit, la précision obtenue avec le procédé, tel qu'il vient d'être décrit, est de l'ordre de la longueur du pixel. Cette précision peut néanmoins être améliorée en utilisant une méthode de suréchantillonnage telle que la méthode dite de « transformation zéro-padding ». Cette méthode de transformation zéro-padding consiste à agrandir l'image de différences de phases (étape 16d) avec des 0 à l'extérieur, ce qui permet d'obtenir, à la sortie du calcul de la transformée inverse de Fourier, une image qui a une résolution inférieure aux images de départ, c'est-à-dire une image dont la précision est inférieure à la taille du pixel.

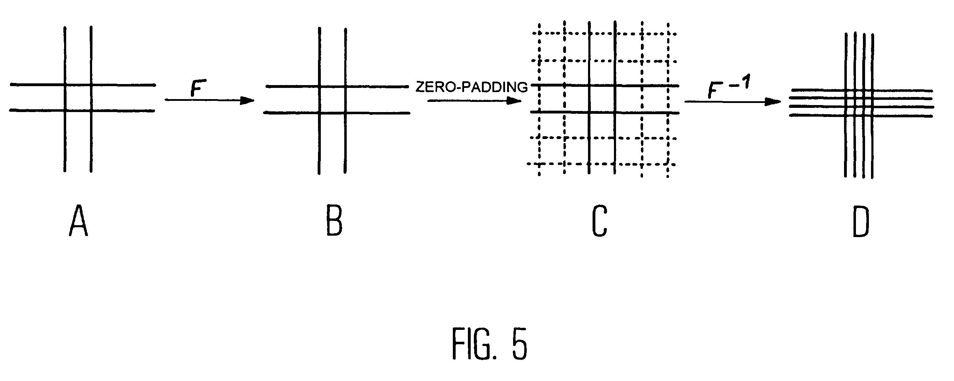

Sur la figure 5, on a représenté globalement les quatre étapes de cette méthode de zéro-padding pour une image représentant une sorte de double croix. La partie A de cette figure 5 représente une image avant la transformée de Fourier ; la partie B représente la même image après une transformation par la transformée de Fourier ; la partie C représente l'image de différences de phases sur laquelle on a rajouté des 0 tout autour de la double croix (objet de l'image) ; et la partie D représente l'image finale obtenue après transformation par la transformée de Fourier inverse. Comme on le voit sur cette partie D de la figure 5, la précision, pour cet exemple, a été améliorée approximativement d'un coefficient 3.

Il est à noter que le procédé de l'invention qui vient d'être décrit peut être appliqué aussi bien à des images bidimensionnelles qu'à des images tridimensionnelles.

Ce procédé de l'invention a l'avantage d'être non-intératif, ce qui permet un temps de calcul à peu près constant. De plus, ce procédé ne nécessite nullement, pour les étapes 12 et 14, d'avoir une qualité de segmentation particulièrement bonne, le résultat du recalage obtenu étant quasiment indépendant de la qualité de la segmentation, c'est-à-dire de la décomposition des images en composantes. En effet, un choix un peu différent des seuils fait évoluer les composantes extraites, mais n'influence pas le résultat final de façon sensible, l'estimation de la transformation rigide demeurant quasiment identique.

## Revendications

**1.** Procédé de détermination d'une transformation géométrique entre deux images I1 et I2 différentes, constituées chacune de pixels image et représentatives d'un même objet, en vue de superposer ces deux images, caractérisé en ce qu'il consiste à :

E13) segmenter chacune des images en différentes composantes et en déduire, pour chaque image, un ensemble d'images segmentées ;

E16) recaler les images segmentées par une mise en correspondance, par la phase, de chaque image :

16a) en prenant, dans l'ensemble d'images segmentées correspondant à l'image I1 et dans l'ensemble d'images segmentées correspondant à l'image I2, respectivement, une première et une seconde composantes d'image constituant la première et la seconde composantes d'un couple de composantes ;
16b) en effectuant une transformée T pour passer chaque composante du couple du domaine spatial à un domaine dual fréquentiel ;
16c) en calculant une image de phase pour chaque composante du couple ;
16d) en calculant, pour chaque couple, une différence entre les deux images de phase des deux composantes du couple et en déduisant une image de différences de phases ;
16e) en déterminant la transformée $T^{-1}$, inverse de la transformée T, de cette image de différences de phases pour déterminer une image de décalage ; et
16f) en effectuant les étapes 16a à 16e pour chaque couple possible de composantes ;

E18) sommer l'ensemble des images de décalage obtenues en 16e pour déterminer une image de décalage total ; et
E20) déterminer, dans cette image de décalage total, le pixel ayant la valeur maximale, les coordonnées de ce pixel fixant les paramètres de la transformation géométrique entre les deux images.

2. Procédé selon la revendication 1, caractérisé en ce que, lorsque la transformation géométrique est une translation, la transformée T est une transformée de Fourier.

3. Procédé selon la revendication 1, dans lequel la transformation géométrique consiste en une rotation et un changement d'échelle, caractérisé en ce que les étapes 16a et 16e consistent à appliquer une transformée de Fourier-Mellin à un groupe constitué d'une rotation et d'un changement d'échelle et à l'associer à une mesure de Haar pour déterminer les paramètres de la rotation et du changement d'échelle.

4. Procédé selon la revendication 1, dans lequel la transformation géométrique consiste en une translation et une rotation, caractérisé en ce que les étapes 16a et 16e consistent à appliquer une transformée de Fourier simple associée à une rotation des images.

5. Procédé selon l'une quelconque des revendications 1 à 4, caractérisé en ce qu'il consiste à étendre les images de différences de phases par une méthode de zéro-padding afin d'augmenter la précision des paramètres déterminés à l'étape E20.

6. Procédé selon l'une quelconque des revendications 1 à 5, caractérisé en ce que la segmentation E13 des images est effectuée en fonction des niveaux de gris des images, cette segmentation consistant à :

E12) déterminer, pour chaque image, un histogramme des niveaux de gris de l'image et choisir, parmi ces niveaux de gris, n seuils de niveaux de gris pour chaque image, avec $n \geq 2$ ;
E14) décomposer chacune des images en fonction de ses n seuils de niveaux de gris et en déduire, pour chaque image I1 et I2, un ensemble de n-1 images segmentées.

FIG. 1A

FIG. 1B

FIG. 2A

FIG. 2B

10 ── OBTENTION DES IMAGES I1 ET I2

12 ── CHOIX DES SEUILS DE NIVEAUX DE GRIS

14 ── DECOMPOSITION DES IMAGES I1 ET I2

13

16 ── CALCUL DU BUFFER DE RECALAGE

18 ── SOMMATION DES BUFFERS DE RECALAGE

20 ── RECHERCHE DU MAXIMUM
DANS LE BUFFER DE RECALAGE GLOBAL

FIG. 3

NOMBRE DE POINTS

FOND          OBJET

0          S          M          NIVEAUX DE GRIS

FIG. 4

A          F→          B          ZERO-PADDING→          C          F⁻¹→          D

FIG. 5

EP 0 949 588 A1

Office européen
des brevets

**RAPPORT DE RECHERCHE EUROPEENNE**

Numéro de la demande

EP 99 40 0832

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 295 200 A (ARTHUR L. BOYER) 15 mars 1994 * colonne 7, ligne 67 - colonne 8, ligne 25 * --- | 1,2,4 | G06T7/00 |
| A | RIZZO G ET AL: "MULTIMODALITY BIOMEDICAL IMAGE INTEGRATION: USE OF A CROSS-CORRELATION TECHNIQUE" PROCEEDINGS OF THE ANNUAL INTERNATIONAL CONFERENCE OF THE ENGINEERI IN MEDICINE AND BIOLOGY SOCIETY, ORLANDO, OCT. 31 - NOV. 3, 1991, vol. 1, no. CONF. 13, 31 octobre 1991, pages 219-220, XP000346248 NAGEL J;SMITH W M * page 219, colonne de gauche, ligne 42 - colonne de droite, ligne 13 * ----- | 1,2,4 | |

DOMAINES TECHNIQUES
RECHERCHES (Int.Cl.6)

G06T

Le présent rapport a été établi pour toutes les revendications

| Lieu de la recherche | Date d'achèvement de la recherche | Examinateur |
|---|---|---|
| LA HAYE | 5 juillet 1999 | Chateau, J-P |

**ANNEXE AU RAPPORT DE RECHERCHE EUROPEENNE
RELATIF A LA DEMANDE DE BREVET EUROPEEN NO.**          EP 99 40 0832

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-1999

| Document brevet cité au rapport de recherche | Date de publication | Membre(s) de la famille de brevet(s) | Date de publication |
|---|---|---|---|
| US 5295200          A | 15-03-1994 | AUCUN | |

EPO FORM P0460

Pour tout renseignement concernant cette annexe : voir Journal Officiel de l'Office européen des brevets, No.12/82